# EUROPÄISCHE PATENTSCHRIFT

(11) **EP 0 642 767 B1**
(45) Veröffentlichungstag und Bekanntmachung des Hinweises auf die Patenterteilung: **21.04.1999**
(21) Anmeldenummer: 93201669.4
(22) Anmeldetag: 14.06.1993
(51) Int. Cl.: A61C 1/00, A61C 13/225, A61C 13/003

(54) **Konstruktion für einen festsitzenden und einen ausnehmbaren Zahnersatz zwischen zwei gesunden oder restaurierten Pfeilerelementen**
Construction for a fixed and a removable prosthesis between two healthy or restored pillar teeth
Construction pour une prothèse fixe et une prothèse démontable entre deux dents piliers sains ou restaurés

(43) Veröffentlichungstag der Anmeldung: 15.03.1995
(73) Patentinhaber: DENTA NET HOLDING B.V., 1315 JA Almere (NL)
(72) Erfinder:

(56) Entgegenhaltungen:
- CH-A- 352 782
- GB-A- 2 117 642
- US-A- 2 609 605
- US-A- 2 826 814

## Beschreibung

Bei dieser Erfindung handelt es sich um eine Vorrichtung zur Verankerung von festsitzenden und ausnehmbaren Zahnersatz, bestehend aus mindestens einer individuell gegossenen Platte aus einem geeigneten Metall nach Wahl, die an der approximalen Seite, in der Höhe des Kontaktpunktes mit einer Öffnung von bestimmtem Maß versehen ist; diese Platte wird mittels Ätz-Klebetechnik am jeweiligen Pfeilerelement befestigt, worauf dann ein ovales Adaptationsstück angegossen, geschweißt oder zementiert wird, das eine konkav gewölbte Seitenfläche und entweder einen keilförmigen oder untergreifend schlaufenförmigen Einschnitt an seiner Oberseite aufweist sowie mit einer runden Öffnung in seiner Mitte ausgestattet ist ( die sich mit der Öffnung in der Platte deckt ), und durch welche ein beweglicher, aus Metall gefräster Stift gesetzt wird, der von einer Sicherungsschraube im Adaptationsstück gehalten und außerdem in einem dafür präparierten Retentionskanälchen im Pfeiler zementiert wird.

Die Erfindung bezieht sich auf Methoden zur Herstellung von ein- und mehrgliedrigem Zahnersatz im Front- oder Seitenzahnbereich zwischen zwei Pfeilerelementen, welche bei der Methodenanwendung soweit wie möglich intakt gelassen werden.
Dieses System löst Nachteile sowie Indikationseinschränkungen, welche die bis heute bekannten Methoden kennzeichnen, wie die in den EP-Patentschriften 0025419, 0162808 und 0236264 beschriebene Verankerungsmethode und die herkömmliche Klebebrücke.
Als Anwendungsbeschränkung einer Klebebrücke gelten vor allem die Tatsachen, daß mit dieser Methode keine Gerüstprothesen und auch wenig erfolgversprechend mehrteilige Brücken im Molarbereich hergestellt werden können. Ihre maximale Belastbarkeit ist nämlich gleich der Haftstärke des verwendeten Zements ; sie besitzt außer der Retention durch die Verklebung keine weitere mechanischen Retentionen, durch die ihre Belastbarkeit erhöht würde (Siehe dazu: Nederlands Tandartsblad, Jahrgang 48, Nr. 9, S. 421: Klinisch gedrag van posterior gevaardigde adhesiefbruggen. Ein Artikel, basiert auf die Dissertation: Posterior Resin-bonded Bridges, eine In-vitro und In-vivo Studie von C.W.G.J. Verzijden, Katholische Universität Nijmegen, 03-03-1993).

Auch die im Dillons Patent 2609605 beschriebene Lösung hat den Nachteil, dass die Platte nicht mit einer zusätzlichen mechanischen Retention im gesunden Pfeilerelement befestigt ist, sondern nur mittels "Verklebung" an der Pfeileroberfläche haftet.

Die Platten oder Flügel einer Klebebrücke reichen oft über mehrere Elemente (was durch den Patienten als störend empfunden werden kann) und weisen eine bestimmte Größe auf, um damit genügend Retentionfläche zu erzeugen. Die okklusalen Abstützungen, die bei solcher Konstruktion manchmal nötig sind, stören die natürliche Okklusion.
Die hier vorgestellte Neuentwicklung hebt diese Nachteile auf und verringert gleichzeitig die Präparationsschäden an den Pfeilern.

Dies wird durch das Anfertigen einer individuellen Platte (1) mit einer Öffnung (2) erreicht, die bei gesunden Pfeilerelementen nur an deren approximalen Seite mittels Ätz-Klebetechnik befestigt wird.
Auf dieser Platte wird dann ein spezifisch geformtes Adaptationsstück (3) festgesetzt, welches in seiner ungefähren Mitte ebenfalls eine Öffnung (6) aufweist, wo ein aus Metall gefräster, beweglicher Stift (8) durchgeführt, im Adaptationsstück von einer Sicherungsschraube (12) gehalten und im Pfeiler in einem dafür präparierten Kanälchen (20) zementiert wird.
Die mechanische Stiftretention in Verbindung mit der chemischen Haftung des Zements durch die Ätz-Klebetechnik (bei Stift und Platte) garantiert eine hohe Belastbarkeit, welche für einen mehrteiligen Zahnersatz im Molarbereich benötigt wird.

Einige von großer Tragweite gekennzeichnete Indikationseinschränkungen des bereits oben erwähnten Verankerungssystem werden von dieser Neuentwicklung ebenfalls aufgehoben. Die Anker des Verankerungssystems können nur in völlig stabile und im approximalen Bereich vollkommen gesunde Pfeilerelemente gesetzt werden. Gerade dieser Bereich ist oft von Karies befallen, und dann ist das Verankerungssystem nicht indiziert.
Die Platte dieser neuentwickelten Konstruktion, die in jeder gewünschten Form herstellbar ist, deckt die eventuell bestehenden Restaurationen ab. Dies ist auch von Vorteil, da besonders Kompositrestaurationen auf die Dauer eine Schrumpfung erfahren und somit ein perfekter Randanschluß auf lange Sicht nicht gewährleistet ist (Siehe dazu: Nederlands Tandartsenblad, Jahrgang 48, Nr. 8, S. 377, Directe restauraties in het posteriorgebied).
Die Platte dient somit auch als Schutz für das betreffende Element.
Es zeigte sich, daß der interdentale Raum zwischen Anker und Brücke (Verankerungssystem) für eine optimale Reinigung schwer zugänglich ist, wodurch auf die Dauer Sekundärkaries entstehen kann.
Ein weiterer Vorteil der Neuentwicklung ist der Wegfall von Präparationen durch Beschleifen der Pfeiler für den Aufsatz der Platten, das wohl für beide oben erwähnte Methoden erforderlich ist und gesunde Zahnsubstanz kostet.

Die neue Konstruktion wird mit nur einem Stift im Pfeilerelement festgesetzt, das eine Anzahl Erleichterungen und Vorteile mit sich bringt.
Erstens wird somit die Anwendung für den Zahnarzt erleichtert; zum Präparieren *eines* Retentionskanälchens ist kein spezielles Instrumentarium nötig (es wird mit Standardgeräten ausgeführt).
Zweitens ist die richtige Plazierung der Konstruktion an den Pfeilern einfacher. Das Gelingen dieses Arbeitsschrittes ist grundlegend für ein befriedigendes ästhetisches Resultat. *Ein* Stift kann präziser am Kontaktpunkt des Pfeilerelements gesetzt werden, was dem Ausarbeiten einer Brücke in ästhetischer Hinsicht entgegenkommt. Drittens wird der Indikationsbereich vergrößert. Bei kurzen klinischen Kronen können oft die Doppelstiftanker nicht verwendet werden. Der Anker muß stets plan am Pfeiler anliegen, damit einem Loslösen durch Friktion vorgebeugt wird; wenn aus Platzmangel die Abflachung für die Auflage des Ankers zu tief angesetzt wird, könnte der zervikale Ankerstift die Pulpa tangieren.
Viertens besitzt der Stift der Neuentwicklung im Vergleich einen größeren Durchmesser und ist gleichzeitig kürzer, wodurch er einerseits einer höheren Belastung widerstehen kann und andererseits allgemein die Gefahr einer Pulpatangierung verringert wird. Zum Beispiel kann ein um 30% größerer Durchmesser 75% mehr Belastung tragen. Der Stift kann also kürzer sein, da er einen stärkeren Durchmesser besitzt, aber auch die zusätzliche Platte der Konstruktion, die mit der Ätz-Klebetechnik befestigt wird, fangt gleichermaßen die vorkommenden Druck-, Scher- und Zugkräfte auf. Außerdem wird der Stift in einem Stück aus Metall gefräst und nicht gegossen, was ebenfalls seine Belastbarkeit erhöht.
Bei der Verankerungsmethode ist eine Verstärkung der Stifte insofern nicht möglich, da die Anker dadurch einen größeren Umfang erhielten. Weiters muß der Abstand zwischen den Stiften mindestens 1,5 mm sein, da die beiden Retentionskanäle meist zusätzliche Bohrausschläge aufweisen, wodurch ihr Durchmesser größer als die nötigen 0,9 mm wird. Zu wenig Raum zwischen den Stiften würde zum Bruch der Zahnsubstanz zwischen den Kanälen führen. Außerdem ist der kleinste der Doppelstiftanker bereits 3,5 mm hoch.

Der Stift der Neukonstruktion weist keine Retentionsrillen auf, somit ist er auf der gesamten Oberfläche gleich stark. Der Verzicht auf Retentionsrillen wird durch die Verbesserung der Zemente in jüngster Zeit ermöglicht, aber auch durch die Verbesserung der Vorbereitungsmethoden für die jeweiligen Klebeoberflächen mit z.B. Silikatisieren.

Da durch die konstruktiven Erneuerungen das System viel graziler ist, wird seine Einsatzmöglichkeit im Vergleich zum Verankerungssystem vergrößert, da die Möglichkeit einer Präparation der gegenüberliegenden Retentionskanälchen in kleinen Diastemen auch von der Stärke des Bohrkopfs abhängig ist.

Das ovale Adaptationsstück hat eine konkav gewölbte Seitenfläche (schmale Seite), wodurch die Brückenmatrix außer der Zementhaftung eine zusätzliche mechanische Retention erfährt.

Die neue Konstruktion kann auch bei mobilen Pfeilerelementen zum Einsatz kommen, wobei gleichzeitig diese Elemente wie durch eine Schienung stabilisiert werden.

Die Kombination einer mittels Ätz-Klebetechnik am Pfeiler befestigten Platte und eines im Pfeilerelement zementierten Stiftes kann einem Mehrfachen des im Mund vorkommenden Kaudrucks widerstehen.

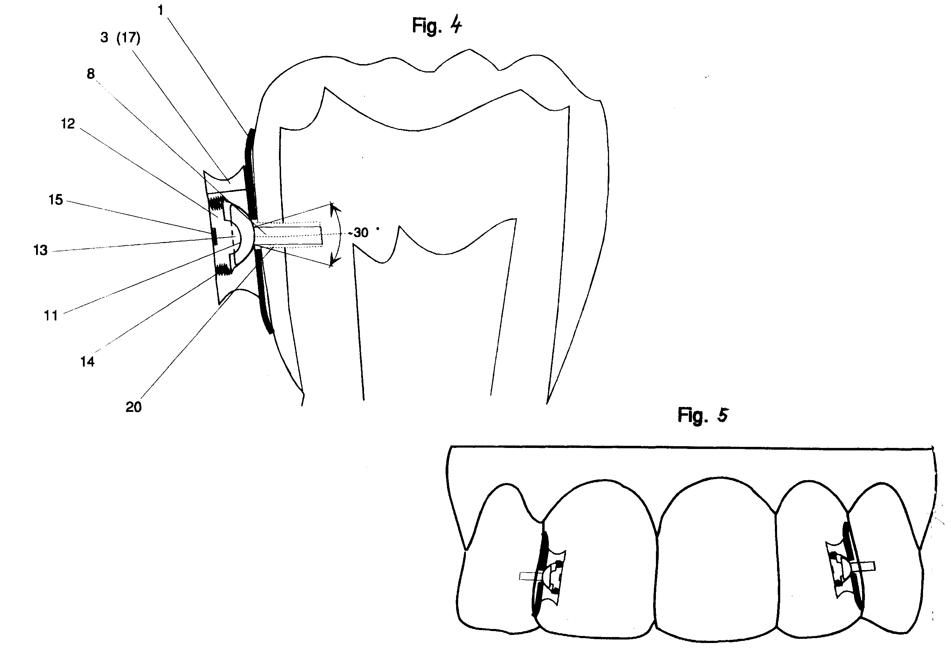

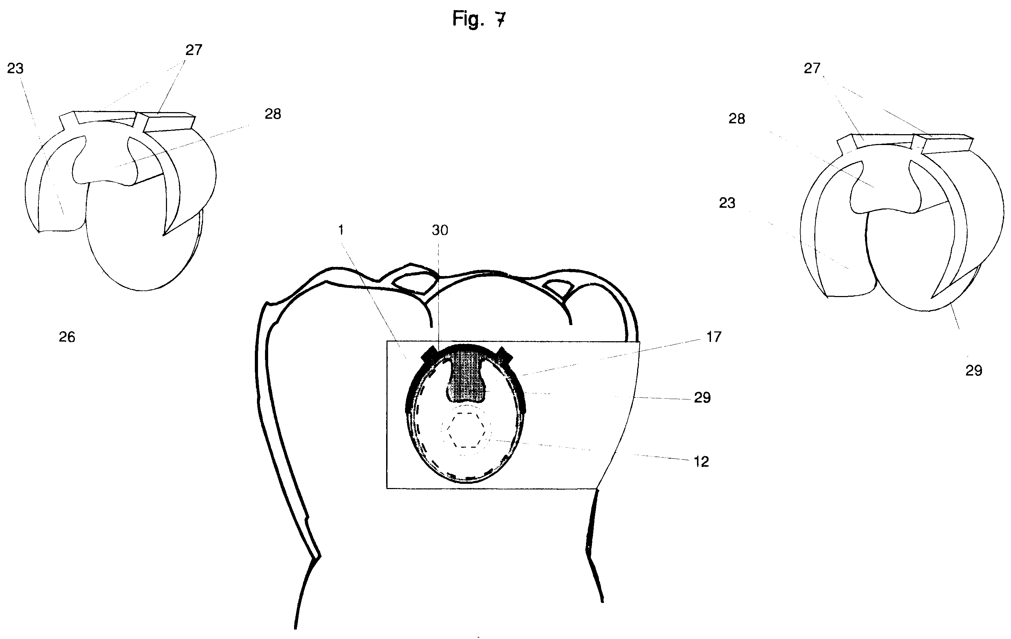

Im folgenden wird die Konstruktion anhand von Skizzen verdeutlicht.

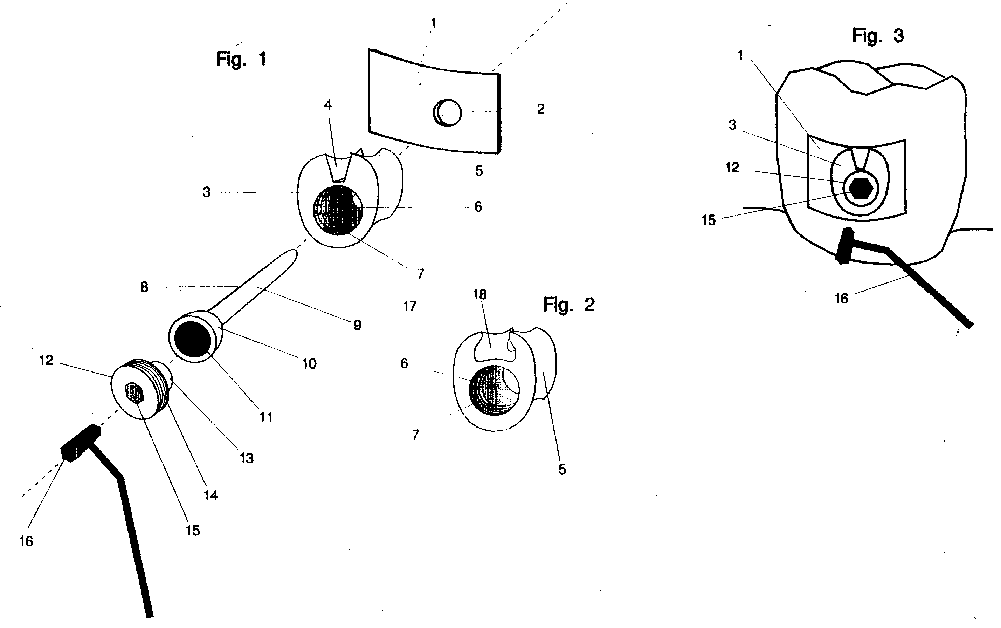

- **Fig. 1**:: Einzelteile einer Patrixkonstuktion für ein Pfeilerelement
(1) Die individuell gegossene Platte mit der approximal gelegenen Öffnung (2) mit bestimmtem Maß, wo der Stift (8) durchgesteckt wird
(3) das ovale Adaptationsstück für einen festsitzenden Zahnersatz
(4) keilförmiger Einschnitt an der Oberseite
(5) die konkav gewölbte Außenseite
(6) die halbkugelförmig sich verjüngende Öffnung, wo der Stift (8) eingeführt wird und der Stiftkopf lagert.
(7) Gewinde für die Sicherungsschraube (12)
(8) der aus Metall gefräste Stift
(9) der zylindrische Stiftteil, der im Element (präparierter Kanal) zementiert wird
(10) halbkugelförmige Stiftkopfbasis
(11) konkave Oberfläche des Stiftkopfs
(12) Sicherungsschraube
(13) halbkugelförmige Basis der Sicherungsschraube, passend in die konkave Oberfläche des Stiftkopfes (11)
(14) Gewinde
(15) sechskantige Vertiefung in der Sicherungsschraube als Ansatzstelle für das Schraubinstrument
(16) Schraubinstrument
- **Fig. 2**:: Varianten des Adaptationsstücks
(17) Adaptationsstück für einen ausnehmbaren Zahnersatz
(18) untergreifend schlaufenförmiger Einschnitt an der Oberseite
(5) konkave Außenseite
(6) halbkugelförmig sich verjüngende Öffnung, wo der Stift (8) eingeführt wird (und Stiftkopf sowie Sicherungsschraube lagern)
(7) Gewinde für die Sicherungsschraube (12)
- **Fig. 3**:: Approximale Ansicht einer Konstruktion für einen festsitzenden Zahnersatz, befestigt an einem Pfeilerelement mit Schraubinstrument
(1) individuell gegossene Platte, mittels Ätz-Klebetechnik am Element befestigt
(3) angegossenes, angeschweißtes oder zementiertes Adaptationsstück
(12) Sicherungsschraube
(15) Einsatzstelle für Schraubinstrument
(16) Schraubinstrument
- **Fig. 4:**: Durchschnitt eines Pfeilerelements und der darauf befestigten Patrixkonstruktion
(1) individuell gegossene Platte mittels Ätz-Klebetechnik befestigt
(3/17) Adaptationsstück mit sich verjüngender Öffnung und Gewinde, auf der Platte befestigt
(12) Sicherungsschraube
(8) Stift, ca. 15° in alle Richtungen schwenkbar
(20) präparierter Retentionskanal mit Zementschicht
(14) Gewinde der Sicherungsschraube
(13) halbkugelförmige Basis der Sicherungsschraube
(11) halbkugelförmige Basis des Stiftkopfes
(15) Ansatzstelle für das Schraubinstrument
- **Fig. 5:**: Transparente Vorderansicht einer dreiteiligen Brücke, aufgesetzt auf eine Patrixkonstuktion an den Elementen 12 und 23.

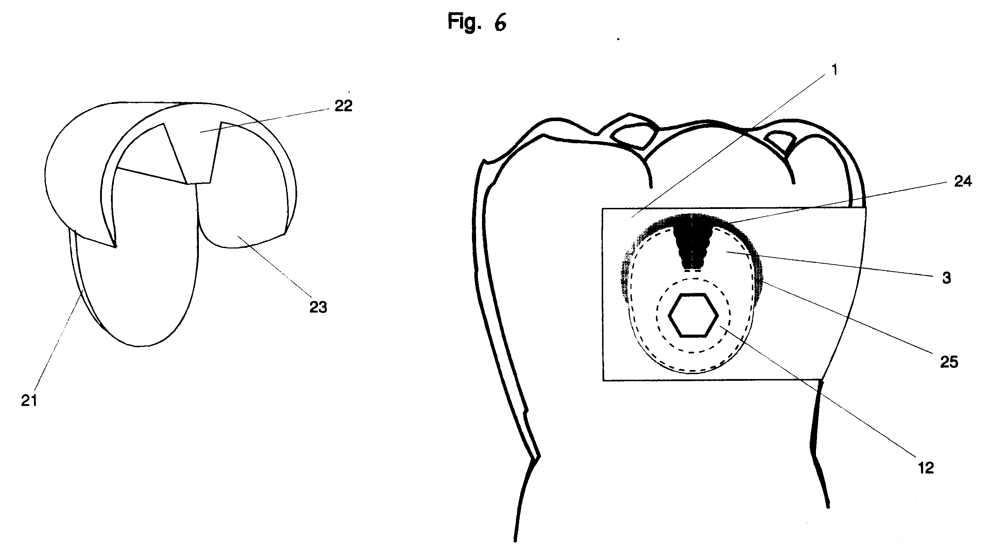

- **Fig. 6:**: Modellierkappe und approximale Ansicht eines Patrix-Matrix Gefüges
(21) Modellierkappe aus Kunststoff zur Herstellung einer Matrix für einen festsitzenden Zahnersatz
(22) keilförmige Ausstülpung, passend in den keilförmigen Einschnitt (4) des Adaptationsstücks
(23) konvexe Innenfläche, passen in die konkave Außenseite (5) des Adaptationsstücks
(1) individuell gegossene Platte, mittels Ätz-Klebetechnik am Pfeiler befestigt
(24) metallene Matrix des Zahnersatzes
(3) Adaptationsstück für einen festsitzenden Zahnersatz, an der Platte befestigt
(25) Zementschicht
(12) Sicherungsschraube mit Vertiefung für das Schraubinstrument
- **Fig. 7:**: Transferkappe aus Kunststoff, Kunststoffauskleidung der Patrix und approximale Ansicht einer ausnehmbaren Patrix-Matrix Konstruktion
(26) Transferkappe aus Kunststoff
(27) balkenförmige Aufsätze, um entsprechende Vertiefungen in der Metallmatrix herzustellen (Halterung für Kunststoffauskleidung)
(28) schlaufenförmige Ausstülpung, um die Läge der Transferkappe im Adaptationsstück für die Herstellung der Brückenmatrix zu fixieren
(23) konvexe Innenfläche
(28) schlaufenförmige Ausstülpung , passend in den entsprechenden Einschnitt an der Oberseite des Adaptationsstücks
(27) balkenförmige Aufsätze, die in die Aussparungen in der Metallmatrix passen
(1) individuell gegossene Platte, befestigt mittels Ätz-Klebetechnik
(30) Metallmatrix des Zahnersatzes
(29) Kunststoffauskleidung, mit den balkenförmigen Aufsätzen an der Oberseite der Metallmatrix fixiert, an der Unterseite in den schlaufenförmigen Einschnitt des Adaptationsstücks geklemmt
(17) Adaptationsstück mit schlaufenförmigem Einschnitt
(12) Sicherungsschraube

### ARBEITSMETHODE

- **Phase 1:**: Vorbereitung durch den Zahnarzt
Der Zahnarzt bestimmt die Stelle am Pfeilerelement, wo die Patrixkonstruktion plaziert werden soll, indem er den Stiftkanal markiert und die Größe und Form der Platte bestimmt. Von der klinischen Situation wird ein Abdruck genommen.
- **Phase 2:**: Arbeiten im Zahnlaboratorium
Der Zahntechniker setzt das Adaptationsstück (3 oder 17) mit der Öffnung deckungsgleich auf den Bohrkanal im Pfeilerelement des Gipsmodells. Um diesen
Kanal wird die Platte nach den Angaben des Zahnarztes in Wachs modelliert und schließlich an das Adaptationsstück gegossen.
Die folgende Arbeitsweise ist ebenso möglich: Zuerst die Platte modellieren und gießen,worauf das Adaptationsstück zementiert oder geschweißt wird. Die spezifische Form des Adaptationsstücks - ein Oval mit einem keilförmigen (4) oder untergreifend schlaufenförmigen (18) Einschnitt an seiner Oberseite, der die Brückenmatrix stabilisiert, verhindert auch Rotation.
Das Adaptationsstück mit dem keilförmigen Einschnitt (4) wird für festsitzenden Zahnersatz verwendet, dasjenige mit dem schlaufenförmigen (18) Einschnitt für ein ausnehmbares System. Die konkav gewölbte Außenseite (5) ermöglicht (zusätzlich zur Zementhaftung) eine mechanische Retention zwischen Adaptationsstück mit Platte (Patrix) und der aufgesetzten Brücke (Matrix).
- **Phase 3:**: Plazierung der Platten-Stift Konstruktionen an den Pfeilerelementen durch den Zahnarzt
Der Zahnarzt bringt den am jeweiligen Pfeiler markierten Stiftkanal auf Tiefe und kontrolliert mit dem Stift (8). Die Platten mit dem entsprechenden Adaptationsstück werden mittels Ätz-Klebetechnik an den beiden Pfeilern angebracht. Durch die Öffnung in der Patrixkonstruktion wird der aus Metall gefräste Stift (8) in den präparierten Retentionskanal eingeführt und der Stiftteil (9) im Element zementiert. Der Stift mit seiner halbkugelförmigen Stiftkopfbasis (10) und konkaver Kopfoberfläche (11) wird mit einer Sicherungsschraube (12) gesichert. An der Sicherungsschraube befindet sich ein Gewinde (14), ihre halbkugelförmige Basis (13) paßt sich in die konkave Oberfläche (11) des Stiftkopfes. Die Sicherungsschraube wird mit einem Schraubinstrument (16) festgesetzt, das in die Vertiefung (15) in der Schraube paßt. Am Schluß dieser Arbeitsphase wird wieder ein Abdruck genommen, diesmal mit den kompletten Patrizen in situ.
- **Phase 4:**: Herstellung einer Brücke im Zahnlabor
Soll ein ausnehmbarer Zahnersatz hergestellt werden, setzt der Zahntechniker die Transferkappe (26) auf das angegossene Adaptationsstück am Gipsmodell. Diese Modell wird, mit den Transferkappen in situ, in Dupliziermasse gesetzt. Auf das duplizierte Modell wird schließlich die Brückenmatrix modelliert. In die gegossene Metallmatrix wird die Kunststoffauskleidung (Ummantelung) (29) geklemmt.
Wird ein festsitzender Zahnersatz gefertigt, setzt der Zahntechniker die Modellierkappen (21) auf die Gipsmodellpatrizen und modelliert dazwischen den Brückenteil.
- **Phase 5:**: Der Zahnarzt setzt die Brücke ein
Bei einem festsitzenden Zahnersatz werden die Brückenmatrizen auf die Pfeilerpatrizen zementiert.

Mit dieser Erfindung kann sowohl ein festsitzender als auch ausnehmbarer ein- oder mehrgliedriger Zahnersatz hergestellt werden, wobei die dafür nötigen Präparierungen ein Minimum an Zahnsubstanz angreifen; die Anwendungsmöglichkeiten sind reichlich, da auch restaurierte Pfeilerelemente in Front- und Seitenzahnbereich funktionell bleiben.

## Patentansprüche

1. Vorrichtung zur Verankerung eines herausnehmbaren oder festsitzenden Zahnersatzes zwischen gesunden oder restaurierten Pfeilerelementen, bestehend aus mindestens einer gegossenen Platte (1) aus einem Metall, die mittels Ätz-Klebetechnik am jeweiligen Pfeilerelement zu befestigen ist, dadurch gekennzeichnet, dass die Platte (1) eine Öffnung (2) aufweist und darauf ein ovales Adaptationsstück (3, 17) entweder angegossen, angeschweisst oder zementiert ist, welches eine konkav gewölbte Aussenseite (5) und einen Einschnitt (4, 18) an seiner Oberseite sowie eine Öffnung (6) aufweist, dass ein aus Metall gefräster, durch die Öffnungen (2, 6) der Platte und des Adaptationsstückes geführter und in diesen beweglicher Stift (8) vorgesehen ist, der in einen präparierten Kanal im Pfeilerelement zu zementieren ist, und dass der Stift (8) im Adaptationsstück (3, 17) von einer Sicherungsschraube (12) gehalten ist.

2. Vorrichtung gemäss Patentanspruch 1, dadurch gekennzeichnet, dass der Einschnitt (18) an der Oberseite des ovalen Adaptationsstücks untergreifend schlaufenförmig ist.

3. Vorrichtung gemäss Patentanspruch 1 und 2, dadurch gekennzeichnet, dass der Einschnitt (4) an der Oberseite des ovalen Adaptationsstücks keilförmig ist.

4. Vorrichtung gemäss Patentanspruch 1, 2, und 3, dadurch gekennzeichnet, dass das ovale Adaptationsstück in seiner Mitte eine halbkugelförmig sich verjüngende Öffnung (6) aufweist.

5. Vorrichtung gemäss Patentanspruch 1, 2, 3, und 4, dadurch gekennzeichnet, dass sich im ovalen Adaptationsstück, am äusseren Rand der halbkugelförmigen Öffnung, ein Gewinde (7) befindet.

6. Vorrichtung gemäss Patentanspruch 1, 2, 3, 4 und 5, dadurch gekennzeichnet, dass der Stiftkopf eine konkave Oberfläche (11) und eine halbkugelförmige Basis (10) aufweist, wobei der Stift in einem Stück aus Metall gefräst ist.

7. Vorrichtung nach Patentanspruch 1, 2, 3, 4, 5, und 6, dadurch gekennzeichnet, dass die Sicherungsschraube eine halbkugelförmige Basis (13) aufweist.

8. Vorrichtung gemäss Patentanspruch 1, 2, 3, 4, 5, 6, und 7, dadurch gekennzeichnet, dass die Sicherungsschraube mit einer Ansatzstelle (15) für das Schraubinstrument versehen ist.

9. Vorrichtung gemäss Patentanspruch 1, 2, 3, 4, 5, 6, 7, und 8, dadurch gekennzeichnet, dass die Modellierkappe (21), als Modellierhilfe für einen festsitzenden Zahnersatz, eine konvex gewölbte Innenseite (23) und eine keilförmige Ausstülpung (22) aufweist.

10. Vorrichtung gemäss Patentanspruch 1, 2, 3, 4, 5, 6, 7, 8, und 9, dadurch gekennzeichnet, dass durch die Transferkappe (26), die eine konvex gewölbte Innenseite (23), eine schlaufenförmige Ausstülpung (28) und balkenförmige Aufsätze (27) an der Oberseite aufweist, präzise Einkerbungen in der Metallmatrix zum Zweck der Fixierung einer Kunststoffauskleidung (29) erzeugt werden.

11. Vorrichtung gemäss Patentanspruch 1, 2, 3, 4, 5, 6, 7, 8, 9, und 10, dadurch gekennzeichnet, dass eine Kunststoffauskleidung (29) mit einer konvex gewölbten Innenfläche (23), einer schlaufenförmigen Ausstülpung (28) und mit balkenförmigen Aufsätzen an der Oberseite (27), die in die entsprechenden Falze in die Metallmatrix gesetzt werden, ein Patrix-Matrix Gefüge für einen ausnehmbaren Zahnersatz ergibt.

## Claims

1. Device for anchoring a removable or fixed tooth replacement between healthy or restored abutment elements, consisting of at least one cast plate (1) made of a metal, which is to be secured on the respective abutment element by means of an etching/adhesive bonding technique, characterized in that the plate (1) has an opening and an oval adaptation piece (3, 17) is either cast, welded or cemented onto the plate, which adaptation piece has a concavely arched outside (5) and an incision (4, 16) on its top edge, and also an opening (6), in that a pin (8) is provided which is milled from metal, is guided through the openings (2, 6) in the plate and the adaptation piece, is movable therein and is to be cemented into a prepared channel in the abutment element, and in that the pin (8) is held in the adaptation piece (3, 17) by a fastening screw (12).

2. Device according to Patent Claim 1, characterized in that the incision (18) on the top of the oval adaptation piece is loop-shaped and provides engagement from below.

3. Device according to Patent Claims 1 and 2, characterized in that the incision (4) on the top of the oval adaptation piece is wedge-shaped.

4. Device according to Patent Claims 1, 2 and 3, characterized in that the oval adaptation piece has a semispherically tapering opening (6) at its centre.

5. Device according to Patent Claims 1, 2, 3 and 4, characterized in that there is a thread (7) in the oval adaptation piece, at the outer edge of the semispherical opening.

6. Device according to Patent Claims 1, 2, 3, 4 and 5, characterized in that the pin head has a concave surface (11) and a semispherical base (10), the pin being milled in a single piece from metal.

7. Device according to Patent Claims 1, 2, 3, 4, 5 and 6, characterized in that the fastening screw has a semispherical base (13).

8. Device according to Patent Claims 1, 2, 3, 4, 5, 6 and 7, characterized in that the fastening screw is provided with an attachment site (15) for the screwing instrument.

9. Device according to Patent Claims 1, 2, 3, 4, 5, 6, 7 and 8, characterized in that the modelling cap (21), as a modelling aid for a fixed tooth replacement, has a convexly arched inner side (23) and a wedge-shaped protuberance (22).

10. Device according to Patent Claims 1, 2, 3, 4, 5, 6, 7, 8 and 9, characterized in that by means of the transfer cap (26) which has a convexly arched inner side (23), a loop-shaped protuberance (28) and bar-shaped attachments (27) on the top, it is possible to produce precise notches in the metal matrix for the purpose of fixing a plastic lining (29).

11. Device according to Patent Claims 1, 2, 3, 4, 5, 6, 7, 8, 9 and 10, characterized in that a plastic lining (29) with a convexly arched inner side (23), a loop-shaped protuberance (28) and bar-shaped attachments on the top (27), which are fitted into the corresponding folds in the metal matrix, forms a patrix/matrix structure for a removable tooth replacement.

## Revendications

1. Dispositif d'ancrage d'une prothèse dentaire amovible ou fixe entre des éléments piliers sains ou restaurés, formé d'au moins une plaque coulée (1) en métal qui doit être fixée au moyen d'une technique de collage par attaque chimique sur l'élément pilier respectif, caractérisé en ce que la plaque (1) présente une ouverture (2), sur laquelle un élément ovale d'adaptation (3, 17) est coulé, soudé ou cimenté, lequel présente une face externe concave (5) et une échancrure (4, 18) sur sa face supérieure, ainsi qu'une ouverture (6), en ce qu'il est prévu un tenon (8) fraisé en métal, qui est guidé dans les ouvertures (2, 6) de la plaque et de l'élément d'adaptation et mobile dans celui-ci, qui doit être cimenté dans un canal apprêté dans l'élément pilier, et en ce que le tenon (8) est maintenu dans l'élément d'adaptation (3, 17) au moyen d'une vis de blocage (12).

2. Dispositif selon la revendication 1, caractérisé en ce que l'échancrure (18) sur la face supérieure de l'élément ovale d'adaptation est en forme de boucle avec contre-dépouille d'accrochage.

3. Dispositif selon les revendications 1 et 2, caractérisé en ce que l'échancrure (4) sur la face supérieure de l'élément ovale d'adaptation est en forme de coin.

4. Dispositif selon les revendications 1, 2 et 3, caractérisé en ce que l'élément ovale d'adaptation présente en son milieu une ouverture (6) qui se rétrécit et est de forme hémisphérique.

5. Dispositif selon les revendications 1, 2, 3 et 4, caractérisé en ce qu'un filetage (7) est situé sur le bord extérieur de l'ouverture hémisphérique de l'élément ovale d'adaptation.

6. Dispositif selon les revendications 1, 2, 3, 4 et 5, caractérisé en ce que la tête du tenon présente une surface concave (11) et une base hémisphérique (10), le tenon étant obtenu par fraisage d'une pièce de métal.

7. Dispositif selon les revendications 1, 2, 3, 4, 5 et 6, caractérisé en ce que la vis de blocage présente une base hémisphérique (13).

8. Dispositif selon les revendications 1, 2, 3, 4, 5, 6 et 7, caractérisé en ce que la vis de blocage est pourvue d'une prise (15) pour l'instrument de vissage.

9. Dispositif selon les revendications 1, 2, 3, 4, 5, 6, 7 et 8, caractérisé en ce que la coiffe de modelage (21) présente, en tant qu'auxiliaire de modelage pour une prothèse dentaire à fixer, une face interne convexe (23) et une protubérance en forme de coin (22).

10. Dispositif selon les revendications 1, 2, 3, 4, 5, 6, 7, 8 et 9, caractérisé en ce qu'on produit des indentations précises dans la matrice métallique, à des fins de fixation d'un revêtement en matière plastique (29), grâce à la coiffe de transfert (26) qui présente une face interne convexe (23), une protubérance en forme de boucle (28) et des épaulements (27) en forme de barre sur la face supérieure.

11. Dispositif selon les revendications 1, 2, 3, 4, 5, 6, 7, 8, 9 et 10, caractérisé en ce qu'un revêtement de matière plastique (29) présentant une face interne convexe (23), une protubérance (28) en forme de boucle et des épaulements (27) en forme de barre sur la face supérieure, qui sont mis en place dans les rainures correspondantes de la matrice métallique, forme un assemblage partie mâle-partie femelle pour une prothèse dentaire amovible.
